# EUROPEAN PATENT SPECIFICATION

(11) **EP 3 515 569 B1**
(45) Date of publication and mention of the grant of the patent: **11.11.2020**
(21) Application number: 17772024.0
(22) Date of filing: 20.09.2017
(51) Int. Cl.: A63F 13/90

(54) **COMPUTER GAME CONTROLLER STAND**
STEUERUNGSTAND FÜR COMPUTERSPIEL
CONTRÔLEUR SUPPORT POUR JEU D'ORDINATEUR

(30) Priority: 20.09.2016 SE 1651243
(43) Date of publication of application: 31.07.2019
(73) Proprietor: Arozzi Europe AB, 595 35 Mjölby (SE)
(72) Inventor: JOHANSSON, Magnus, 596 31 Skänninge (SE); ANDERSSON, Thomas, 595 93 Mjölby (SE)
(74) Representative: AWA Sweden AB
(86) International application number: PCT/EP2017/073694
(87) International publication number: WO 2018/054930

(56) References cited:
- GB-A- 2 392 718
- GB-A- 2 515 589
- US-A- 4 067 606

## Description

### Technical field

The present disclosure relates to equipment for enhancing the experience of computer or video gaming, and in particular to a computer game controller stand, to a computer gaming unit and to a method of making a computer gaming unit.

### Background

It is known to provide so-called "gaming chairs" or "play seats" in order to enhance gaming experience, especially when playing car racing or flight simulator type computer or video games.

Such gaming chairs or play seats generally comprise a frame, a seat and one or more supports for mounting controller modules.

Gaming chairs or play seats are particularly desirable when using multiple controller modules, such as a hand actuated controller, e.g. a steering wheel module, together with a foot actuated controller, such as a pedal module.

However, gaming chairs are costly and generally bulky and thus take up a lot of space when not in use.

Consequently, relatively few users are prepared to pay for and/or are have the space for, such gaming chairs.

One solution is provided by US7857311 B2 and US4067606 A, through which a controller stand is connected to the legs of a normal chair.

However, today, many computer gamers like to have an office type chair, or a "swivel chair" with caster wheels. Preferably, such chairs should have at least some of the appearance and properties of an automobile racing seat, e.g. in terms of side support and backrest adjustability.

Hence, the known solution is not applicable to the type of chairs that are preferred by many gamers.

A controller stand according to the pre-characterising portion of claim 1 is also disclosed in US2010/0194155A1 and GB 2392718 A.

Hence, there is a need for an improved gaming chair, and in particular for a gaming chair which may enable more users to enjoy an enhanced gaming experience.

### Summary

An object of the present disclosure is to provide a controller stand, which alleviates at least some of the problems mentioned by way of introduction.

The invention is defined by the appended independent claims. Embodiments are set forth in the appended dependent claims, in the following description and in the drawings.

According to a first aspect, there is provided a computer game controller stand according to claim 1.

According to a second aspect, there is provided a computer gaming unit as defined by claim 11.

According to a third aspect, there is provided a method of making a computer gaming unit as defined by claim 14.

### Brief description of the drawings

Figs 1a-1b schematically illustrate a controller stand.
Fig. 2 schematically illustrate a controller stand fitted with controller modules.
Figs 3a-3c schematically illustrate a gaming unit, comprising a controller stand fitted with controller modules and a gaming chair.
Fig. 4 schematically illustrates a chair connector.
Figs 5a-5c schematically illustrate a caster cradle 16.
Figs 6a-6c schematically illustrate a caster cradle 17.
Figs 7a-7c schematically illustrate a caster cradle 18.
Figs 8a-8c schematically illustrate a caster cradle 19.
Figs 9a-9b schematically illustrate another design of a controller stand.

### Detailed description

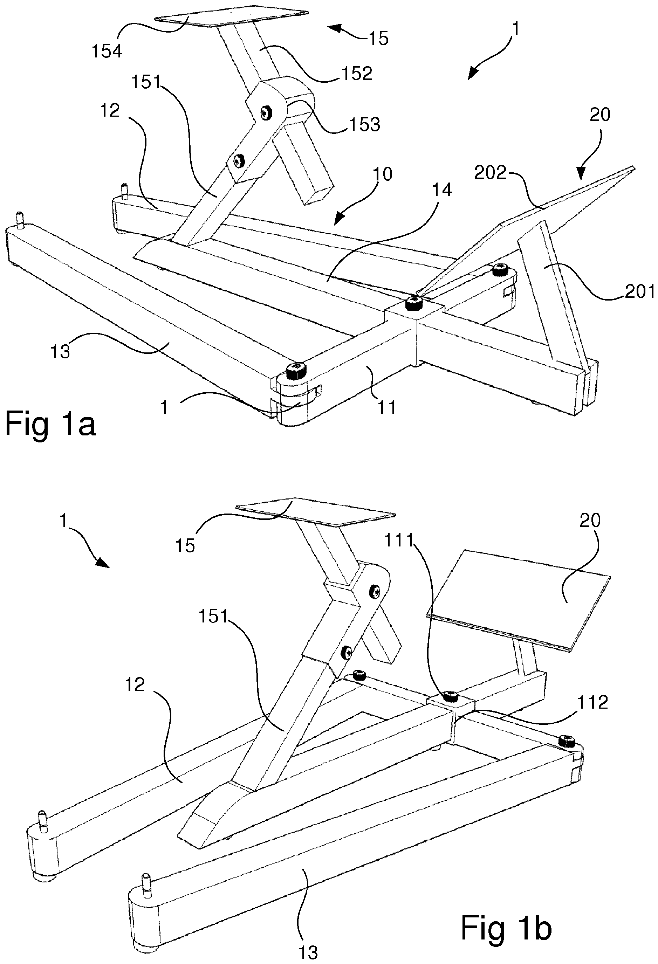

Figs 1a-1c schematically illustrate an example of a video game controller stand 1 according to the present disclosure.

The stand 1 comprises a frame 10, which is formed of a cross member 11, a pair of elongate rear support members 12 13, a central longitudinal support member 14 and a pair of controller supports 15, 20. A first one of the controller supports 15 is adapted for receiving a hand controller 2 and the second one 15 is adapted for receiving a foot controller 3.

The controller supports 15, 20 may be connected to the central support member 14. For example, the hand controller support 15 may be arranged rearwardly of the cross member 11 and the foot controller support may be arranged forward of the cross member 11.

The central support member 14 may be movable relative to the cross member 11, such that the position of the controller supports 15, 20 may be adjustable. For example, the central support member 14 may be slidable relative to a central portion 111 of the cross member 11.

Such slidable arrangement may be provided by providing a through recess 112 in the cross member. Such through recess 112 may have a cross section which corresponds to a cross section of the central support member. In such recess one or more guides or bearings may be provided. For example a polymer material lining may be provided.

The slidable arrangement may be provided with a locking device for locking the central support member relative to the cross member.

The locking device may be a friction locking device which may operate towards a surface of the central support member.

For example, the locking device may comprise a wedge member, which when brought into engagement with the central support member provided frictional locking.

Alternatively, the locking device may operate towards a plurality of predetermined and optionally fixed engagement points in the central support member.

For example, the locking device may comprise a pin, which may be biased towards a locked position, and a corresponding hole or recess in the longitudinal support member.

The rear support members 12, 13 may extend rearwardly from lateral distal portions 113, 114 of the cross member 11.

The rear support members 12, 13 may be fixedly connected to the cross member 11.

Alternatively, the respective the rear support members 12, 13 may be pivotably connected to the cross member, such that the rear support members may pivot about a respective vertical axis relative to the cross member.

Referring to Fig. 1a, upwardly extending members 151, 201 may be provided for the controller supports 15, 20. These members may be fixedly connected to the central member 14, at respective ends thereof.

A hand controller upwardly extending member 151 may extend upwardly at an angle of 30°-150° relative to the central member 14. In the illustrated example, the angle may be about 40°-70°.

A second upwardly extending member 152 may be provided. This second member may be adjustable relative to the first member 151. For example, the second upwardly extending member may extend at an angle of about 70°-110°, preferably about 90°, relative to the first member 151.

The second member 152 may be adjustable by a sliding mechanism, similar to that provided for the central member 14 relative to the cross member 11. This mechanism may be provided in a connector 153, which may be formed as a separate part, to which the first and second members 151, 152 are connectable. This separate part may be formed of a metallic or plastic material.

A hand controller support surface 154 may be provided in the form of a planar member of metallic or plastic material.

The foot controller support may comprise a vertical member 201 and a support surface 202, which may be formed of a planar member of a metallic or plastic material.

The vertical member may be fixedly attached or attachable to the central member. Alternatively, an angle between the vertical member 201 and the central member 14 may be adjustable.

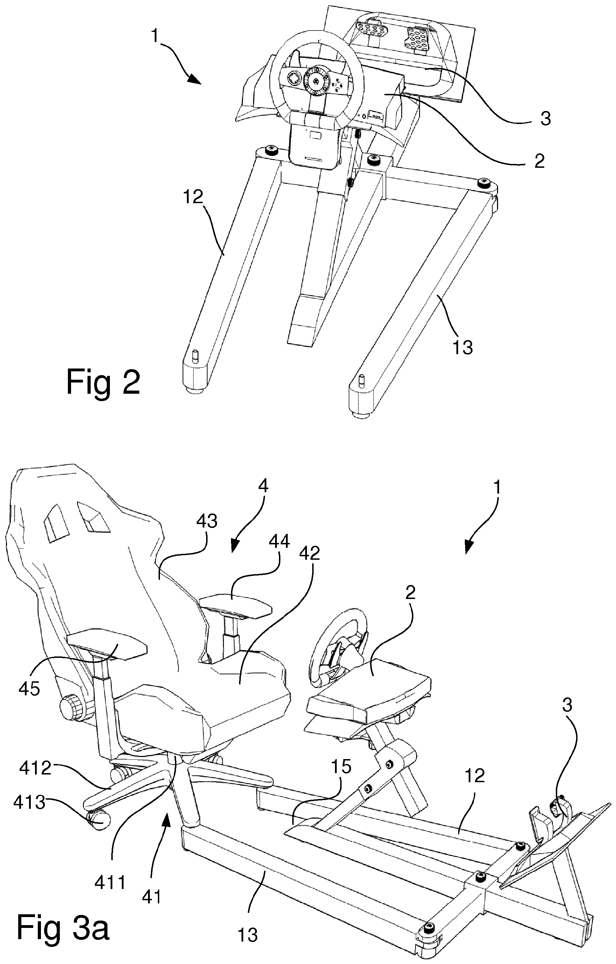

Fig. 2 illustrates the stand with controllers 2, 3 mounted thereon.

A hand controller 2 has been mounted on the hand controller support 15. This hand controller 2 has the form of a steering wheel module. Such steering wheel modules are known as such and may comprise a steering wheel, a number of buttons and/or gear shifter, e.g. in the form of paddles or in the form of a gear stick.

Alternatively, the hand module may comprise a joystick, which may be supplemented by a throttle regulator, e.g. in the form of a slidable controller.

A foot controller 3 has been mounted on the foot controller support 20. This foot controller comprises a plurality of pedals, three in the illustrated example, but may comprise any number of pedals, typically one, two or three.

Controllers 2, 3 may be mounted to the controller supports 15, 20 by any type of mounting device. Examples of such mounting devices include straps, hook-and-loop type fasteners, clamping devices or even threaded connectors, such as nut-and-bolt connectors.

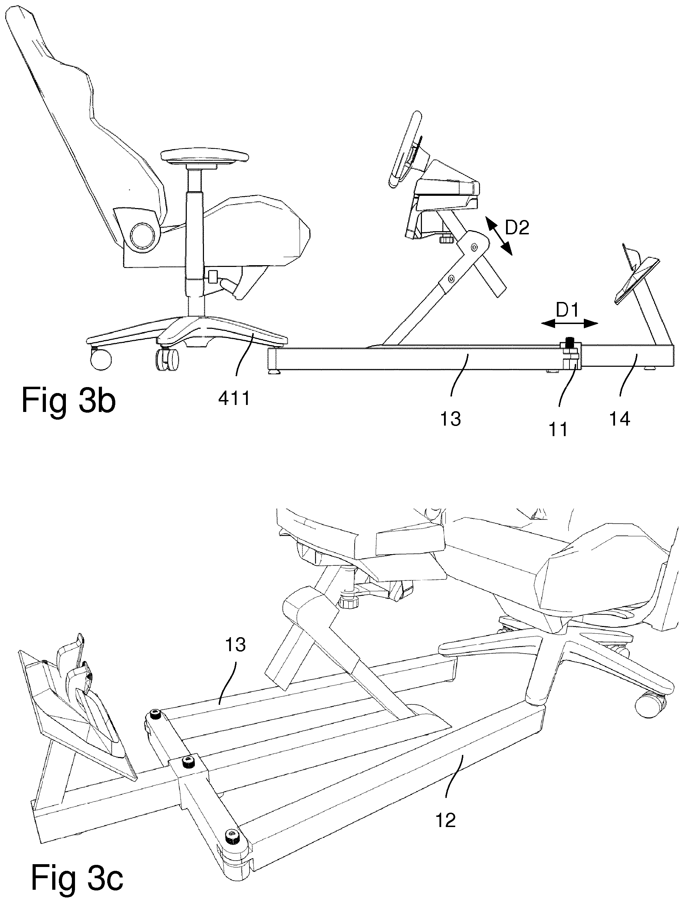

Figs 3a-3b schematically illustrate the stand 1 with controllers 2, 3 when connected to a chair 4, here in the form of a swivel type gaming chair.

In the illustrated example, the chair connectors comprises a respective upwardly extending pin 123, 133, which is adapted to be introduced into corresponding downwardly open caster mounting pin recesses of the chair base 41. Hence, in order to connect the chair connectors to the chair, one or more casters need to be removed from the chair base 41, after which the pins 123, 133 are introduced into the respective caster mounting pin recess.

Hence, the stand 1 illustrated in Figs 1a-1c is adapted for connection to a swivel type chair 4, comprising a chair base 41 having a centrally located vertical member 411 and a plurality of arms 412, which connect at their respective proximal ends and which, at their respective distal ends are provided with a caster.

Typically, such chairs may comprise three or more pivot casters 413, typically four or five. The chair 4 may further comprise a seat 42, a backrest 43 and a pair of armrests 44, 45.

The controller supports 15, 20 may be adjustable relative to the remainder of the frame.

Preferably, each controller support 15, 20 may be adjustable, such that the stand 1 can be adapted for users of different sizes.

For example, referring to Fig. 3b, the central support member 14 may be adjustable relative to the cross member 11, as described earlier, along a first longitudinal direction D1. Through this adjustment, the distance between the chair and both controllers may be adjusted simultaneously.

Moreover, the vertical position of the hand controller 2 may be adjusted along a second direction D2, which may present an angle of 0-90 degrees relative to the first direction. In the illustrated example, the second direction D2 presents an angle of about 30-60 degrees relative to the first direction D1.

The adjustment mechanism of this hand controller support 15 may be the same as that of the central support member 14 relative to the cross member 11.

As an alternative, the first controller support 15 may have one adjustment for height (substantially perpendicular, such as about 80°-100° relative to the first direction D1), and one adjustment for length (substantially parallel, such as about -10°-10° relative to the first direction D1).

Moreover, an angle of the first controller support surface may be adjustable.

The second controller support 20 may, as illustrated, be fixed.

As an alternative, the second controller support 20 may have one adjustment for height (substantially perpendicular, such as about 80°-100° relative to the first direction D1), and one adjustment for length (substantially parallel, such as about -10°-10° relative to the first direction D1).

Moreover, an angle of the second controller support surface may be adjustable.

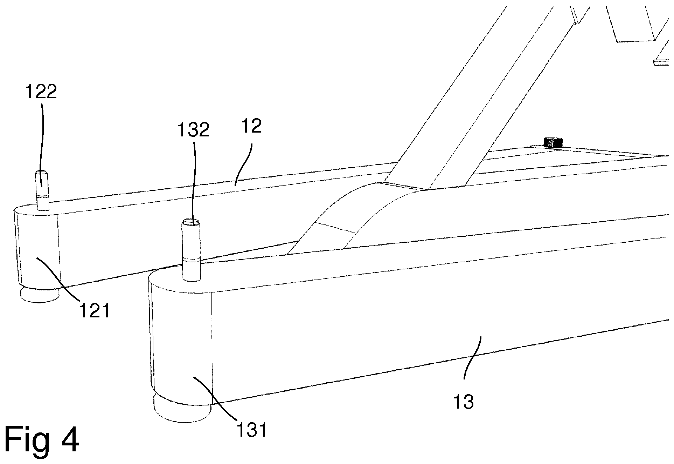

Fig. 4 illustrates in detail the rearwardly distal portions of the rear support members 12, 13.

At the rearwardly distal portion 121, 131 of the rear support members 12, 13, a respective chair connector 122, 132 is provided, for connection to the base 41 of a chair 4.

The parts forming the frame, including the members 11, 12, 13, 14 may be formed of a metallic material, such as steel or aluminum, with any cross section deemed suitable, such as rectangular, square or circular.

As an alternative to removing one or more pivot casters from the chair base 41 to allow for connection to the stand 1, it is possible to provide a caster cradle. Such a caster cradle may comprise a frame or other type of base, into which the caster, while mounted on the chair, can be placed, whereby horizontal relative movement between the chair 4 and the stand 1 is prevented. Optionally, a locking device may be provided for preventing also vertical relative movement.

The description will now focus on embodiments comprising a caster cradle.

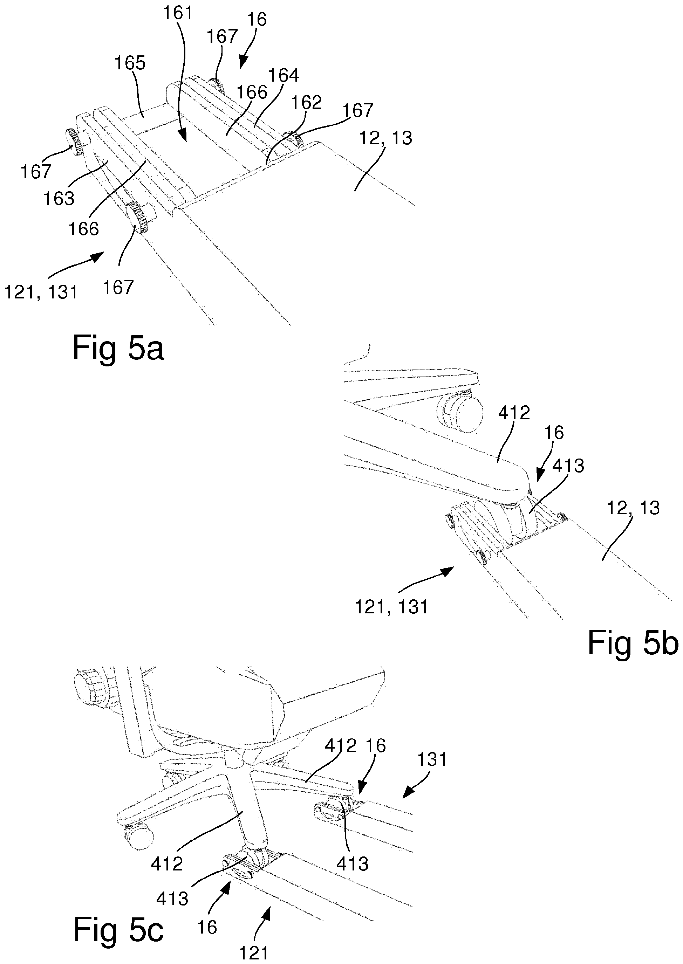

Figs 5a-5c schematically illustrate a first embodiment of a computer game controller stand comprising a caster cradle 16.

Fig. 5a schematically illustrates a distal portion of a pair of rear support members 12, 13 of a controller stand.

Fig. 5b schematically illustrates the distal portion 121, 131 with a pivot caster 413 received therein.

Fig. 5c schematically illustrates a pair of such distal portions 121, 131 with respective pivot casters 413 received therein.

The distal portion 121, 131 of the rear support member 12, 13 forms a caster cradle 16, which is defined by a proximal edge 162, a pair of side edges 163, 164 and a distal edge 165.

The proximal edge 162 may be flush with an upper surface of the rear support member 12, 13.

The side edges 163, 164 may extend from laterally spaced portions of the proximal edge 162 towards the distal edge 165.

The distal edge 165 may extend between distal portions of the side edges 163, 164.

The distal edge 165 may be lower than the proximal edge 162. For example, a vertical height of the distal edge 165 may be less than 50 % of a height of the proximal edge 162, preferably less than 30 % or less than 10 %. Hence, a caster 413 may easily be introduced into the cradle 16 by merely passing over the distal edge 165.

One or both of the side walls 163, 164 may be provided with clamps 166, 167, which are adapted to clamp the caster 413 to prevent it from moving once it has been received in the caster cradle 16.

Such clamps 166, 167 may be formed by a clamping member 166, which is movable relative to the cradle edge 163, 164 and at least one actuator member 167, which here is illustrated by a threaded members, which, when rotated causes the clamping member 166 to move relative to the cradle edge163, 164.

In the illustrated embodiment, each clamping member 166 may be provided with a pair of such threaded members 167. Each cradle 16 may be provided with one or two such clamping members 166.

As illustrated, the cradle 16 may form an upwardly and downwardly open receptacle 161. Thus, the caster 413 may be introduced through a substantially vertical relative movement between the caster 413 and the rear support member 12, 13, whereby the caster 413 will come to rest directly on the floor surface, on which the chair and the computer game controller stand are positioned.

In order to connect the chair 4 to the cradle 16, the locking members 166 are brought to a position which allows the caster 413 to be introduced into the cradle 16. The caster 413 is then introduced into the cradle 16, either through a vertical motion, or through rolling over the distal edge 165. Once the caster 413 is properly received in the cradle 16, the locking members 166 are activated, e.g. tightened, such that the caster 413 is locked into position.

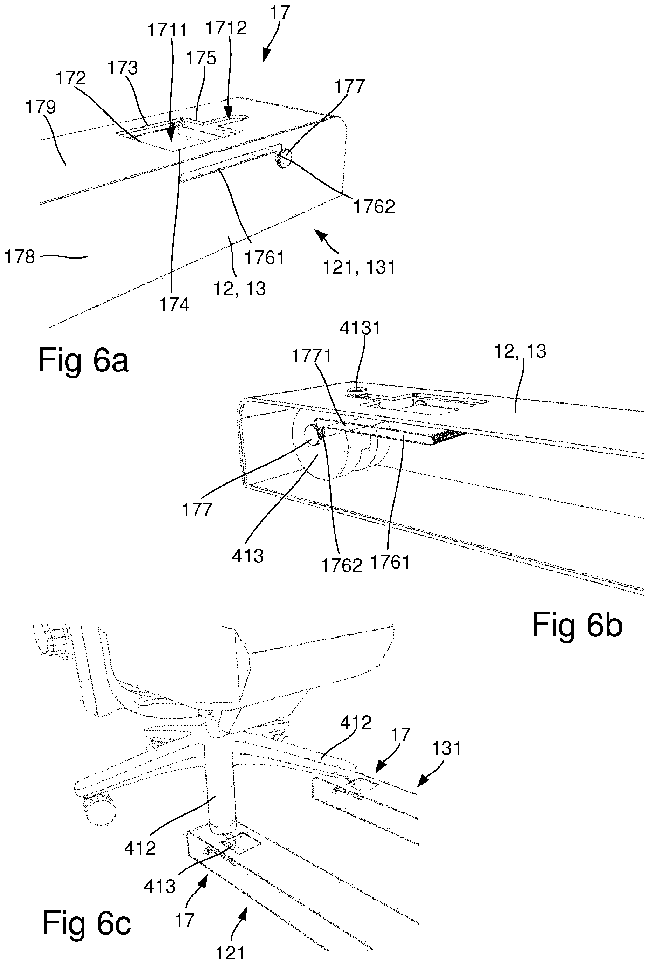

Figs 6a-6c schematically illustrate a second embodiment of a computer game controller stand comprising a caster cradle 17.

Fig. 6a schematically illustrates a distal portion of a pair of rear support members 12, 13 of a controller stand.

Fig. 6b schematically illustrates the distal portion 121, 131 with a pivot caster 413 received therein, and the chair base left out, for clarity.

Fig. 6c schematically illustrates a pair of such distal portions 121, 131 with respective pivot casters 413 received therein, and with the chair base 412 visible.

The distal portion 121, 131 of the rear support member forms a caster cradle 17, which is defined by a proximal edge 172, a pair of side edges 173, 174 and a distal edge 175. Sides of the support members 12, 13 may be open or closed.

In this embodiment, the caster cradle 17 presents an opening 1711, 1712 of a "keyhole" type, with a first portion 1711 through which the caster 413 can be introduced by a relative vertical motion, and a second portion 1712, which is large enough for the caster pivot mount 4131 to extend through, but small enough to prevent the caster 413 from passing there through.

In the illustrated embodiment, the second portion 1412 is formed as a slit extending perpendicular from one of the edges 175 of the first portion 1711.

Depending on the height of the rear support member 12, 13, the chair base 412 may be caused to rest on the upper surface 179 of the rear support member 12, 13. Thus, the caster 413 may not take any vertical load from the chair 4 when received in the cradle 17.

Alternatively, the rear support member 12, 13 may be low enough for the caster member 413 to reach a bottom surface of the cradle 17, to thus take some, or all, of the vertical load from the chair 4.

The cradle 17 illustrated in Figs 6a-6c may (but need not) be provided with a locking device 1761, 1762, 177. In the illustrated embodiment, the locking device may comprise one or two slots 1761, 1762 extending in the length direction of the rear support member 12, 13.

The slot 1761, 1762 may comprise a longitudinal portion 1761 and one or more locking portions 1762, each of which may extend downwardly from the longitudinal portion 1761.

The locking device 1761, 1762, 177 may further comprise a locking member 177, which is displaceable in the slot 1761, 1762 between a first position (here at a proximal part of the cradle 17), in which the caster 413 is allowed to leave or enter the first portion 1711 of the opening; and a second position (here at a distal portion of the cradle 17), in which the caster 413 is locked into position and thus prevented from leaving the cradle 17.

The locking member 177 may comprise a pin 1771. Such pin may be axially biased so as to prevent it from moving, or at least to prevent it from rattling.

Alternatively, the pin 1771 may be provided with a thread, such that it can be tightened when positioned e.g. at a desired locking position.

In order connect the chair 4 to the cradle 17 of Figs. 6a-6c, the locking member 177 is positioned at the proximal portion of the longitudinal slots 1761, after which the caster 413 is introduced into the first portion 1711 of the opening. The caster 413 is then moved horizontally towards the distal portion of the opening and into the second portion 1712 of the opening. When the caster 413 has been positioned at the desired position, the locking member 177 may be slid towards the distal portion of the slot 1761 and vertically into the locking portion 1762 of the slit. At this point, the locking member 177 may simply be allowed to remain in position by gravity, or it may be biased or tightened so as to prevent it from leaving its position.

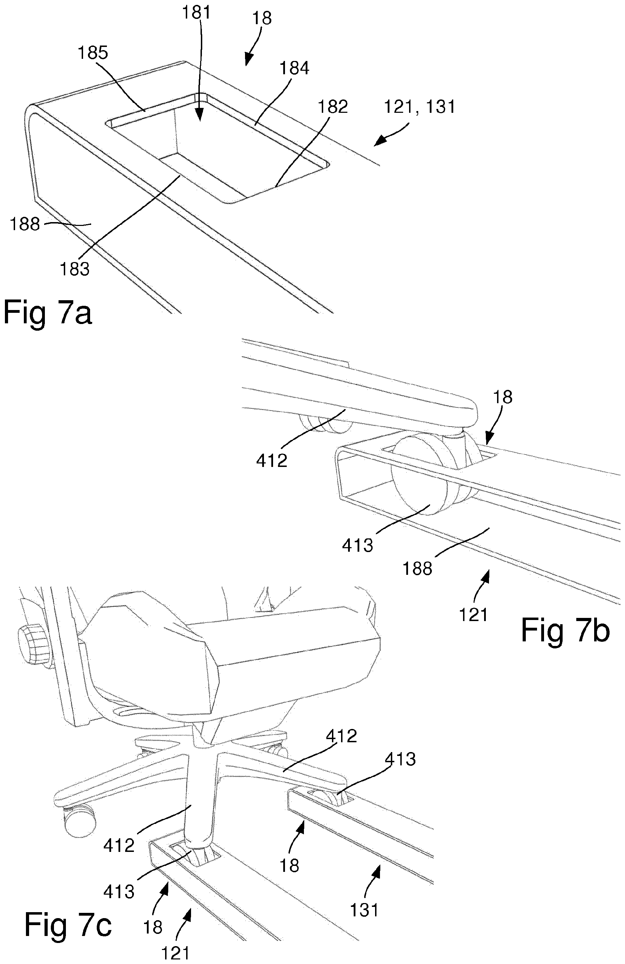

Figs 7a-7c schematically illustrate a third embodiment of a computer game controller stand comprising a caster cradle 18.

Fig. 7a schematically illustrates a distal portion of a pair of rear support members 12, 13 of a controller stand.

Fig. 7b schematically illustrates the distal portion 121, 131 with a pivot caster 413 received therein.

Fig. 7c schematically illustrates a pair of such distal portions 121, 131 with respective pivot casters 413 received therein.

In the embodiment of Figs 7a-7c, the caster cradle 18 is simply formed by a rear support member 12, 13 having a substantially rectangular cross section and being provided with an upwardly open opening 181, which is sized to receive a pivot caster 413 of a chair 4. The opening may be defined by a proximal edge 182, a pair of side edges 183, 184 and a distal edge 185. The opening 181 may present a length and width which are about 101-120 % of the corresponding dimension of the pivot caster 413.

Sides of the support members 12, 13 may be open or closed.

Moreover, in this embodiment, the cradle 18 presents a bottom surface 188, on which the caster 413 may rest when received in the cradle 18.

In this embodiment, it is preferred if the support members 12, 13 present a vertical height of about 30-75 % of a caster wheel diameter.

To connect the chair to the cradle, the chair is simply lifted and the casters 413 are allowed to be received in the cradles 18 through the openings 181. In practical applications, this may imply a height of about 10-40 cm, preferably 20-30 mm.

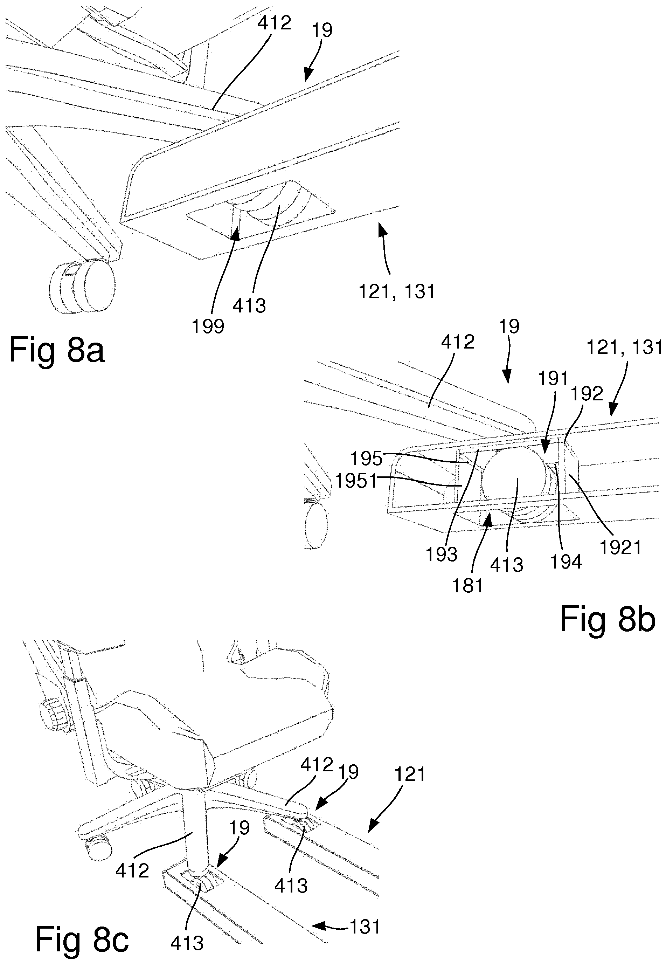

Figs 8a-8c schematically illustrate a fourth embodiment of a computer game controller stand comprising a caster cradle 19.

Fig. 8a schematically illustrates a distal portion 121, 131 of a pair of rear support members 12, 13 of a controller stand.

Fig. 8b schematically illustrates the distal portion 121, 131 with a pivot caster 413 received therein.

Fig. 8c schematically illustrates a pair of such distal portions 121, 131 with respective pivot casters 413 received therein.

The embodiment of Figs 8a-8c is similar to that of Figs 7a-7c, but with the difference that the cradle 19 does not present any bottom surface. Thus the caster 413, when received in the cradle 19, will rest directly on the floor surface.

Hence, the cradle 19 is defined by an upper opening 191 having a proximal edge 192, a pair of side edges 193, 194 and a distal edge 195. The cradle may, but need not, comprise a lower opening 199 through which the caster 413 may contact the floor surface.

Moreover, the cradle has been provided with at least one vertical wall 1921, 1951, here actually two such walls; a proximal vertical wall 1921 and a distal vertical wall 1951; which reduce the amount of horizontal relative movement between the caster 413 and the support member 12, 13.

In this embodiment, the support members 12, 13 may present a greater vertical height than in Figs 7a-7c, and may be on the order of 75-110 % of a caster diameter.

It is understood that, while the frame may preferably be formed of metal, such as steel or aluminum (or alloy), the cradles 16, 17, 18, 19 may be wholly or partially provided with lining material that may help prevent wear on the casters 413 and/or which may prevent noise from being generated by the interaction between the caster 413 and the cradle 16, 17, 18, 19. Such liners may be formed of a polymer material, such as plastic, rubber, etc., or from a woven material or a non-woven material, such as fabric or felt.

The liner may be provided on one or more of the edges, on one or more of the walls or on any vertically supporting surface.

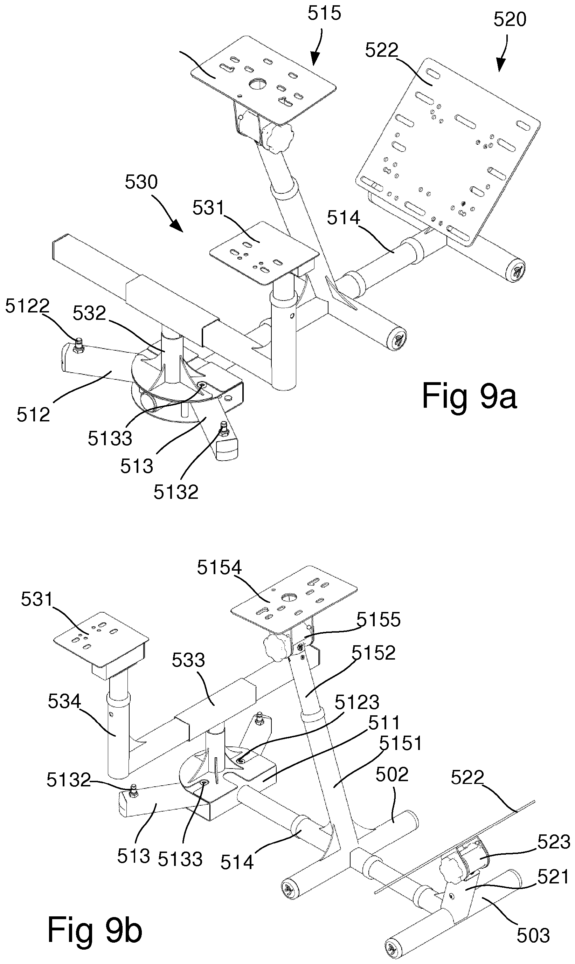

Referring to figs 9a-9b, there is illustrated another embodiment of a computer game controller stand.

This computer game controller stand comprises a central member 514, which may be formed by a tubular member of fixed or variable length. Such variable length may be achieved by telescope action.

At least one cross member 502, 503, 511 may be provided to prevent the stand from tipping over sideways.

At distal portions of one of the cross members 511, the longitudinal members 512, 513 may be arranged. These longitudinal members are pivotable relative to the cross member 511 about a respective vertical axis 5133, 5123.

At distal ends of the longitudinal members 512, 513, a respective chair connector 5122, 5132 is provided. The chair connectors may, as non-limiting examples, be designed according to any of the embodiments disclosed in the preceding figures.

A hand controller support 515 may comprise a hand controller upwardly extending member 5151 extending upwardly at an angle of 30°-150° relative to the central member 514, preferably about 50°-105° or about 65°-85°. In the illustrated example, the angle may be about 60°-70°.

A second upwardly extending member 5152 may be provided. This second member may be adjustable relative to the first member 5151, e.g. by telescopic engagement.

The hand controller support surface 5154 may be adjustable relative to the second member by means of an angle adjustment mechanism 5155, at least with respect to angle about a horizontal axis extending perpendicular to the main member 514.

The hand controller support surface 5154 may be provided in the form of a planar member of metallic or plastic material.

A foot controller 520 support may comprise a vertical member 521 and a support surface 522, which may be formed of a planar member of a metallic or plastic material. An angle adjustment mechanism 523 may be provided to allow the foot controller support to be adjusted at least with respect to angle about a horizontal axis extending perpendicular to the main member 514.

The vertical members 5151, 521 may be fixedly attached or attachable to the central member 514. Alternatively, an angle between the vertical members and the central member 514 may be adjustable.

In addition, the controller stand of figs 9a-9b may comprise an auxiliary hand controller support 530, which may be used e.g. to support a gear shifter, which may be used together with a steering wheel module that is supported by the hand controller support 515. The auxiliary hand controller support 530 may comprise a support member 531, which may provide a generally flat surface and means, such as holes, etc., for attaching the gear shifter to it.

The auxiliary hand controller support 530 may further comprise a first vertical member 532, which may be attached to the frame of the computer game controller stand, e.g. on or near one of the cross members 511, 502, 503. The first vertical member may be rotatable about a vertical axis.

The auxiliary hand controller support 530 may further comprise a horizontal member 533, which may be supported at an upwardly distal portion of the first vertical member 532.

At a distal portion of the horizontal member 533, there may be provided a second vertical member 534, which connects the horizontal member 533 with the support member 531.

The tubular members may have a cross section which may be approximately generally circular, generally square, generally rectangular, etc.

## Claims

1. A computer game controller stand, comprising:
a frame (10),
a controller support (15, 20), connected to the frame, said controller support being configured to support at least one computer game controller, such as a steering wheel module, a joystick module or a pedal module, and
a chair connector (122, 132), configured for preventing horizontal relative movement between the frame and a chair (4),
wherein
the chair connector is adapted to allow the frame and the chair base (412) to pivot relative each other about a vertical axis,
wherein the chair connector is connectable to a chair base pivot caster mount, or
the chair connector is connectable to a caster (413) and comprises a caster cradle (16, 17, 18, 19), adapted for receiving a pivot caster (413) of a caster chair,
the frame comprises a cross member (11) and a pair of longitudinal members (12, 13) extending generally rearwardly from the cross member (11), and
the chair connectors are provided at a distal end of the respective longitudinal members,
**characterized in that**
the longitudinal members (12, 13) are pivotable in a horizontal plane relative to the cross member (11).

2. The computer game controller stand as claimed in claim 1, wherein the chair connector comprises a vertically upwardly extending pin (122, 132), sized and adapted for being received in a caster mounting receptacle of a caster chair base (41).

3. The computer game controller stand as claimed in claim 1, wherein the caster cradle (16, 17, 18, 19) comprises an upwardly open receptacle, defining a cradle space.

4. The computer game controller stand as claimed in claim 3, wherein the cradle space comprises a proximal edge (162, 172, 182, 192) adapted to prevent the caster (413) from moving in a direction towards the game controller stand, wherein the proximal edge (162, 172, 182, 192) is provided by an edge of an opening (161, 171, 181, 191) of the receptacle, or wherein the proximal edge (192) is provided, at least partially, by a wall (1921) of the receptacle.

5. The computer game controller stand as claimed in claim 1, wherein the chair connector comprises a downwardly open receptacle, adapted for receiving a pin.

6. The computer game controller stand as claimed in any one of the preceding claims, wherein the frame presents a forward direction, parallel with a horizontal direction which a user would face when using the game controller.

7. The computer game controller stand as claimed in any one of the preceding claims, wherein the frame comprises a central member (14), extending along the forward direction, and wherein the controller support (15, 20) extends upwardly from said central member.

8. The computer game controller stand as claimed in claim 7, wherein the central member (14) is movable relative to the cross member (11).

9. The computer game controller stand as claimed in any one of the preceding claims, wherein the controller stand comprises a first controller support (15) adapted for receiving a hand-actuated controller and a second controller support (20) adapted for receiving a foot-actuated controller.

10. The computer game controller stand as claimed in any one of the preceding claims, further comprising an auxiliary game controller support (530).

11. A computer gaming unit, comprising:
a computer game controller stand (1) as claimed in any one of the preceding claims, and
a chair (4) configured to be supported on at least three casters,
wherein the chair connector is connected to one of the casters or to a pivot caster mount.

12. The computer gaming unit as claimed in claim 11, wherein the chair connector is connected to a receptacle for receiving a caster mounting pin.

13. The computer gaming unit as claimed in claim 11 or 12, wherein the chair (4) is a swivel type chair.

14. A method of making a computer gaming unit, comprising:
providing a computer game controller stand as claimed in any one of claims 1-10,
providing a chair that is configured to be supported on at least three casters, and
connecting at least one of the casters or a pivot caster mount to a chair connector of the computer game controller stand.

15. The method as claimed in claim 14, further comprising removing at least one caster from the chair prior to said connecting step.

## Patentansprüche

1. Ein Computerspielsteuerungssockel, umfassend:
ein Rahmen (10),
eine Steuerungsstütze (15, 20), die mit dem Rahmen verbunden ist, wobei die genannte Steuerungsstütze so konfiguriert ist, dass sie mindestens eine Computerspielsteuerung stützt, wie beispielsweise ein Lenkradmodul, ein Joystickmodul oder ein Pedalmodul, und
ein Stuhlanschlussstück (122, 132), das konfiguriert um eine horizontale Relativbewegung zwischen dem Rahmen und einem Stuhl (4) zu verhindern,
wobei
das Stuhlanschlussstück so angepasst ist, dass sich der Rahmen und das Fußkreuz (412) relativ zueinander um eine vertikale Achse drehen können,
wobei das Stuhlanschlussstück mit einer Halterung der Drehrollen des Fußkreuzes verbindbar ist, oder
das Stuhlanschlussstück mit einer Rolle (413) verbindbar ist und eine Rollenaufnahmevorrichtung (16, 17, 18, 19), die zur Aufnahme einer Drehrolle (413) eines Rollenstuhls angepasst ist, umfasst,
wobei der Rahmen eine Querstrebe (11) und ein Paar Längsträger (12, 13), die sich im Allgemeinen vom der Querstrebe (11) nach hinten erstrecken, umfasst, und
wobei die Stuhlanschlussstücke an einem distalen Ende der jeweiligen Längsträger angeordnet sind,
**dadurch gekennzeichnet, dass**
die Längsträger (12, 13) in einer horizontalen Ebene relativ zu der Querstrebe (11) schwenkbar sind.

2. Der Computerspielsteuerungssockel nach Anspruch 1, wobei das Stuhlanschlussstück einen sich vertikal nach oben erstreckenden Stift (122, 132) umfasst, der so bemessen und angepasst ist, dass er in einer Fassung der Rollenhalterung eines Rollenfußkreuzes (41) aufgenommen werden kann.

3. Der Computerspielsteuerungssockel nach Anspruch 1, wobei die Rollenaufnahmevorrichtung (16, 17, 18, 19) eine nach oben offene Fassung umfasst, die einen Fassungsraum definiert.

4. Der Computerspielsteuerungssockel nach Anspruch 3, wobei der Fassungsraum eine proximale Kante (162, 172, 182, 192), die angepasst ist, um zu verhindern, dass sich die Rolle (413) in eine Richtung auf den Computerspielsteuerungssockel zu bewegt, umfasst, wobei die proximale Kante (162, 172, 182, 192) durch eine Kante einer Öffnung (161, 171, 181, 191) der Fassung bereitgestellt wird, wobei die proximale Kante (192) zumindest teilweise durch eine Wand (1921) der Fassung bereitgestellt ist.

5. Der Computerspielsteuerungssockel nach Anspruch 1, wobei das Stuhlanschlussstück eine nach unten offene Fassung, die zum Aufnehmen eines Stifts angepasst ist, umfasst.

6. Der Computerspielsteuerungssockel nach einem der vorhergehenden Ansprüche, wobei der Rahmen eine Vorwärtsrichtung, die parallel zu einer horizontalen Richtung ist, der ein Benutzer bei Verwendung des Spielsteuerung gegenüberstehen würde.

7. Der Computerspielsteuerungssockel nach einem der vorhergehenden Ansprüche, wobei der Rahmen ein mittiges Bauteil (14), das sich entlang der Vorwärtsrichtung erstreckt, und wobei sich die Steuerungsstütze (15, 20) von dem genannten mittigen Bauteil nach oben erstreckt, umfasst.

8. Der Computerspielsteuerungssockel nach Anspruch 7, wobei das mittige Bauteil (14) relativ zu der Querstrebe (11) beweglich ist.

9. Der Computerspielsteuerungssockel nach einem der vorhergehenden Ansprüche, wobei der Steuerungssockel eine erste Steuerungsstütze (15), die zum Empfangen einer handbetätigten Steuerung angepasst ist, und eine zweite Steuerungsstütze (20), die zum Empfangen einer fußbetätigten Steuerung angepasst ist, umfasst.

10. Der Computerspielsteuerungssockel nach einem der vorhergehenden Ansprüche, der ferner eine zusätzliche Spielsteuerungsstütze (530) umfasst.

11. Eine Computerspieleinheit, umfassend:
einen Computerspielsteuerungssockel (1) nach einem der vorhergehenden Ansprüche und
einen Stuhl (4), der konfiguriert ist, um auf mindestens drei Rollen getragen zu werden, wobei das Stuhlanschlussstück mit einer der Rollen oder mit einer Halterung einer Drehrolle verbunden ist.

12. Die Computerspieleinheit nach Anspruch 11, wobei das Stuhlanschlussstück mit einer Fassung zum Aufnehmen eines Rollenhalterungsstifts verbunden ist.

13. Die Computerspieleinheit nach Anspruch 11 oder 12, wobei der Stuhl (4) ein Drehstuhl ist.

14. Ein Verfahren zur Herstellung einer Computerspieleinheit, umfassend:
Bereitstellen eines Computerspielsteuerungssockel nach einem der Ansprüche 1 bis 10,
Bereitstellen eines Stuhls, der so konfiguriert ist, um auf mindestens drei Rollen zu getragen werden, und
Verbinden von mindestens einer der Rollen oder einer Halterung einer Drehrolle mit einem Stuhlanschlussstück des Computerspielsteuerungssockels.

15. Verfahren nach Anspruch 14, das ferner das Entfernen von mindestens einer Rolle vom Stuhl vor dem genannten Verbindungsschritt umfasst.

## Revendications

1. Support de contrôleur de jeu d'ordinateur, comprenant :
un cadre (10),
un support de contrôleur (15, 20), connecté au cadre, ledit support de contrôleur étant configuré pour supporter au moins un contrôleur de jeu d'ordinateur, tel qu'un module de volant, un module de joystick ou un module de pédale, et
un connecteur de chaise (122, 132), configuré pour empêcher un mouvement relatif horizontal entre le cadre et une chaise (4),
dans lequel
le connecteur de chaise est adapté pour permettre au cadre et à la base de chaise (412) de pivoter l'un par rapport à l'autre autour d'un axe vertical,
dans lequel le connecteur de chaise peut être connecté à une monture de roulette pivotante de base de chaise, ou
le connecteur de chaise peut être connecté à une roulette (413) et comprend un berceau à roulettes (16, 17, 18, 19), adapté pour recevoir une roulette pivotante (413) d'une chaise à roulettes,
le cadre comprend un élément transversal (11) et une paire d'éléments longitudinaux (12, 13) s'étendant généralement vers l'arrière à partir de l'élément transversal (11), et
les connecteurs de chaise sont pourvus à une extrémité distale des éléments longitudinaux respectifs,
**caractérisé en ce que**
les éléments longitudinaux (12, 13) peuvent pivoter dans un plan horizontal par rapport à l'élément transversal (11).

2. Support de contrôleur de jeu d'ordinateur selon la revendication 1, dans lequel le connecteur de chaise comprend une tige s'étendant verticalement vers le haut (122, 132), dimensionnée et adaptée pour être reçue dans un réceptacle de montage de roulettes d'une base de chaise à roulettes (41).

3. Support de contrôleur de jeu d'ordinateur selon la revendication 1, dans lequel le berceau à roulettes (16, 17, 18, 19) comprend un réceptacle ouvert vers le haut, définissant un espace de berceau.

4. Support de contrôleur de jeu d'ordinateur selon la revendication 3, dans lequel l'espace de berceau comprend un bord proximal (162, 172, 182, 192) adapté pour empêcher la roulette (413) de se déplacer dans une direction vers le support de contrôleur de jeu, dans lequel le bord proximal (162, 172, 182, 192) est pourvu par un bord d'une ouverture (161, 171, 181, 191) du réceptacle, ou dans lequel le bord proximal (192) est pourvu, au moins partiellement, par une paroi (1921) du réceptacle.

5. Support de contrôleur de jeu d'ordinateur selon la revendication 1, dans lequel le connecteur de chaise comprend un réceptacle ouvert vers le bas, adapté pour recevoir une tige.

6. Support de contrôleur de jeu d'ordinateur selon l'une quelconque des revendications précédentes, dans lequel le cadre présente une direction vers l'avant, parallèle à une direction horizontale vers laquelle un utilisateur serait orienté lors de l'utilisation du contrôleur de jeu.

7. Support de contrôleur de jeu d'ordinateur selon l'une quelconque des revendications précédentes, dans lequel le cadre comprend un élément central (14), s'étendant le long de la direction vers l'avant, et dans lequel le support de contrôleur (15, 20) s'étend vers le haut à partir dudit élément central.

8. Support de contrôleur de jeu d'ordinateur selon la revendication 7, dans lequel l'élément central (14) est mobile par rapport à l'élément transversal (11).

9. Support de contrôleur de jeu d'ordinateur selon l'une quelconque des revendications précédentes, dans lequel le support de contrôleur comprend un premier support de contrôleur (15) adapté pour recevoir un contrôleur actionné manuellement et un second support de contrôleur (20) adapté pour recevoir un contrôleur actionné par le pied.

10. Support de contrôleur de jeu d'ordinateur selon l'une quelconque des revendications précédentes, comprenant en outre un support de contrôleur de jeu auxiliaire (530).

11. Unité de jeu sur ordinateur, comprenant :
un support de contrôleur de jeu d'ordinateur (1) selon l'une quelconque des revendications précédentes, et
une chaise (4) configurée pour être supportée sur au moins trois roulettes,
dans lequel le connecteur de chaise est connecté à l'une des roulettes ou à une monture de roulette pivotante.

12. Unité de jeu sur ordinateur selon la revendication 11, dans laquelle le connecteur de chaise est connecté à un réceptacle pour recevoir une tige de montage de roulette.

13. Unité de jeu sur ordinateur selon la revendication 11 ou 12, dans laquelle la chaise (4) est une chaise du type chaise pivotante.

14. Procédé de fabrication d'une unité de jeu sur ordinateur, comprenant :
la fourniture d'un support de contrôleur de jeu d'ordinateur selon l'une quelconque des revendications 1 à 10,
la fourniture d'une chaise étant configurée pour être supportée sur au moins trois roulettes, et
la connexion d'au moins une des roulettes ou une monture de roulette pivotante à un connecteur de chaise du support de contrôleur de jeu d'ordinateur.

15. Procédé selon la revendication 14, comprenant en outre le retrait d'au moins une roulette de la chaise avant ladite étape de connexion.
